# FASCICULE DE BREVET EUROPEEN

(11) **EP 2 736 966 B1**
(45) Date de publication et mention de la délivrance du brevet: **21.02.2018**
(21) Numéro de dépôt: 12748739.5
(22) Date de dépôt: 13.07.2012
(51) Int. Cl.: C08J 9/00, B29C 44/08, C08J 9/06, C08L 23/14, C08K 3/34, C08K 7/02, B29C 45/00, B29C 44/02

(54) **FORMULATION EXPANSIBLE À BASE DE RÉSINE DE POLYPROPYLÈNE**
AUFSCHÄUMBARE ZUSAMMENSETZUNG AUF BASIS VON POLYPROPYLENHARZ
POLYPROPYLENE RESIN-BASED EXPANDABLE FORMULATION

(30) Priorité: 29.07.2011 FR 1156985
(43) Date de publication de la demande: 04.06.2014
(73) Titulaire: NOVARES FRANCE, 92140 Clamart (FR)
(72) Inventeur: NABETH, Bruno, F-06000 Nice (FR); SAMSON, Nathalie, F-06500 Castellar (FR); CREDOZ, Olivier, F-06500 Menton (FR); GERMAIN, Elsa, F-06000 Nice (FR)
(74) Mandataire: Delorme, Nicolas
(86) Numéro de dépôt international: PCT/FR2012/051679
(87) Numéro de publication internationale: WO 2013/017769

(56) Documents cités:
- US-A- 5 266 619
- US-A1- 2005 058 824
- US-A1- 2010 298 456

## Description

La présente invention a pour objet une formulation à base de résine de polypropylène, une pièce plastique expansée fabriquée à partir de cette formulation, trouvant notamment son application dans le domaine automobile et un procédé d'injection et de moussage de la formulation permettant la fabrication de la pièce plastique expansée.

Les pièces plastiques notamment destinées à des applications dans le domaine automobile sont généralement produites par un procédé d'injection de résine à base de polypropylène comprenant des charges inorganiques telles que du talc ou de la fibre de verre. Ces charges inorganiques ont pour effet d'améliorer les propriétés mécaniques, telles que la rigidité et la résistance aux chocs des pièces obtenues.

Mais la présence de ces charges, telles que le talc notamment, ne permet généralement pas d'obtenir une pièce plastique avec un bel aspect de surface du fait, par exemple, de la remontée de talc vers la surface au cours du des opérations d'injection et de moussage. Pour remédier à cet inconvénient, il peut être nécessaire d'appliquer une contre pression d'air lors du remplissage du moule à injection ce qui implique l'utilisation d'un moule à l'étanchéité parfaite.

Par ailleurs, la présence de ces charges minérales conventionnelles ne permet généralement pas de répondre à une problématique majeure actuelle de l'industrie automobile concernant l'allégement des véhicules puisqu'elles augmentent la densité des matières (la densité d'un poplypropylène passe de 0,9 à 1,05 avec l'adjonction de 20% de talc de densité 2,7).

Un but de l'invention est alors de fournir une formulation à base résine de polypropylène afin de fabriquer des pièces plastiques expansées légères, qui présentent des propriétés mécaniques adaptées à une utilisation dans le domaine automobile, un bel aspect de surface ainsi qu'une bonne tenue à la rayure.

A cet effet, la présente invention propose une formulation à base de résine de polypropylène comprenant les éléments suivants :
- entre 50 et 90 parties en poids d'un copolymère de propylène et d'éthylène,
- entre 9 et 20 parties en poids d'un mélange de charges minérales comprenant 40 à 80% de talc et 20 à 60% de charges du groupe comprenant des microsphères, des fibres et des microtalcs,
- entre 0.1 et 10 parties en poids d'un agent gonflant, les parties en poids des différents éléments de la formulation étant choisie telles que la somme est de 100 parties en poids,
la formulation présentant un indice de fluidité en masse MFR compris entre 50g/10min et 200g/10min et une densité comprise avant expansion de l'agent gonflant entre de 0.95 g/cm³ et 1g/cm³.

Il doit être noté que le poids de la totalité des éléments composant la formulation est de 100 parties en poids.

Par « microtalc » on entend un talc de dimension submicronique de 1,8 microns contre 3,5 microns pour le talc et une surface spécifique de 17 m²/g contre 6,2 m²/g pour le talc. La surface spécifique augmentée du microtalc en comparaison avec le talc confère un effet renforçant plus important pour un même taux de charge ; cela contribue à un compromis choc/rigidité très favorable. L'incorporation de microtalc permet une augmentation de la contrainte au seuil en traction en fonction du pourcentage de charge par opposition au talc. Il améliore l'isotropie du retrait après moulage par injection.

L'utilisation de 9 à 20 parties en poids d'un mélange de charges minérales comprenant 20 à 60% de microsphères, fibres ou de microtalcs permet d'obtenir une formulation de faible densité de sorte à pouvoir fabriquer des pièces expansées légères, tout en conservant les propriétés mécaniques attendues dans le domaine automobile.

L'indice de fluidité en masse MFR (acronyme anglais de Melt Flow Rate) élevé favorise une expansion régulière de la formulation pour constituer une région moussée au coeur de la pièce comportant des porosités de tailles homogènes réparties uniformément. De plus, cette fluidité contribue à faciliter l'injection dans un moule de sorte à ce que la matière ainsi formulée épouse parfaitement la forme des parois du moule et conduise à une pièce plastique présentant un bel état de surface, sans défaut visible à l'oeil nu.

La présence de charges minérales telles que des charges sphériques, fibreuses ou microtalcs contribue également à l'obtention d'un bel état de surface de la pièce plastique. Ceci permet de simplifier le procédé de fabrication par comparaison à un procédé conventionnel utilisant une formulation dont les charges minérales ne comportent que du talc. En effet, grâce à la formulation de l'invention, il n'est pas nécessaire d'appliquer une contre-pression d'air pendant l'injection pour obtenir un bel état de surface et de ce fait le moule utilisé peut être moins coûteux car moins étanche. Parmi les documents de l'art antérieur, le document US2010/298456 décrit une composition expansible comprenant 40 à 94% en poids de résine de propylène, 5 à 30% d'un copolymère d'éthylène-alpha oléfine et 1 à 30% d'une charge minérale, de préférence fibreuse.

Le brevet US5266619 décrit la fabrication d'un pare-chocs à partir d'une composition comprenant 51 à 60% en poids d'un polypropylène, 20 à 30% d'un copolymère éthylène-propylène et 15 à 25% de talc.

Selon un mode particulier de réalisation de l'invention, le copolymère de polypropylène est constitué d'un copolymère de propylène et d'éthylène de sorte à générer un polymère de faible masse moléculaire permettant d'atteindre une formulation de faible viscosité.

Avantageusement, le mélange de charges minérales comprend 40 à 80% de talc et 20 à 60% de charges fibreuses comprenant des fibres synthétiques à base de magnésium qui améliorent les propriétés mécaniques ainsi que la résistance à la rayure d'une pièce moulée à partir de cette formulation. De plus, le gain de poids entre une formulation comprenant 20 parties en poids de ce mélange de charge et une formulation similaire comprenant 20 parties en poids de talc est d'environ 7%.

Selon un mode de réalisation particulier, les fibres présentent un diamètre inférieur à 1 micromètre et une longueur inférieure à 100 micromètres et de préférence une longueur inférieure à 50 micromètres ce qui contribue également à améliorer l'état de surface des pièces.

Selon une variante de réalisation, la formulation comprend entre 0 et 10 parties en poids d'additif anti-UV et de sorte que la somme des parties en poids des différents éléments de la formulation est de 100 parties en poids, de sorte à protéger le matériau moulé des rayons UV très énergétiques qui pourraient le dégrader.

Selon un deuxième aspect, l'invention concerne une pièce plastique expansée, notamment destinée aux véhicules, constituée d'un matériau comprenant une formulation à base de résine de polypropylène précédemment décrite de sorte à ce que la pièce soit légère et présente un bel état de surface.

Selon un mode de réalisation particulier de l'invention, le matériau présente un taux d'expansion compris entre 30 et 50 % dans une première région centrale s'étendant selon la dimension la plus importante de la pièce, laquelle première région est insérée entre une seconde et une troisième région de surface dotées d'un matériau non expansé. Ce taux d'expansion dans une région située au coeur de la pièce moulée permet d'alléger de la pièce tout en conservant les propriétés mécaniques souhaitées et en limitant les risques de délaminage au sein de la région centrale.

Grâce à l'utilisation de la formulation précédemment décrite, la seconde et troisième région de surface ou « couches de peau » présentent une face extérieure comportant un bel état de surface, sans défaut visuel.

De préférence, la pièce plastique expansée présente une résistance à la rayure avec une variation de luminance ΔL comprise entre 1,4 et 1,5 mesuré par quadrillage avec une force appliquée sur la pointe de 10N, une vitesse de déplacement de la pointe de 4.0 cm/s ± 0.1 cm/s, le quadrillage comprenant 8 incisions dans chaque direction avec un espacement de 2mm entre chacune d'elle, de sorte à éviter la formation de griffures en surface de la pièce et sa détérioration, notamment quand elle est utilisée à l'intérieur ou extérieur d'un véhicule. La pièce conserve ainsi un bel aspect de surface sur toute sa durée de vie.

Selon une possibilité, la pièce plastique expansée présente une épaisseur totale Ef et la seconde et la troisième région de surface présentent chacune une même épaisseur comprise entre (Ef/7,2) et (Ef/3,75). Ceci permet d'équilibrer les épaisseurs de la première région moussée et de la deuxième et troisième région non moussées, de sorte à ce que la pièce présente une bonne résistance à la rupture ainsi qu'un plan de symétrie parallèle au plan de la plus grande dimension de la première région centrale. Ainsi, les propriétés mécaniques sont homogènes de part et d'autre du plan de symétrie de la pièce. C'est la fluidité élevée qui autorise le moussage, le moussage étant d'autant plus efficace que la fluidité est élevée.

L'épaisseur Ef de la pièce plastique mesure typiquement entre 2.5 et 3.2 mm.

Selon un mode particulier de réalisation de l'invention, la pièce constitue un élément intérieur de véhicule automobile tel qu'une pièce d'habillage de coffre et en particulier une garniture latérale de coffre, une garniture de hayon ou un custode arrière (ou partie latérale verticale arrière d'une carrosserie automobile qui sert de support à la couverture de l'automobile).

Selon un autre mode particulier de réalisation de l'invention, la pièce constitue un élément extérieur de véhicule automobile tel qu'une pièce de protection de bas de porte.

De préférence, la pièce plastique expansée présente un module d'Young compris entre 1600 et 2100 MPa et une résistance au choc de Charpy mesurée par entaille selon la norme ISO 179/1 eA et comprise entre 15kJ/m² et 20kJ/m² à 23°C et comprise entre 2kJ/m² et 4kJ/m² à -20°C. De la sorte, la pièce présente une rigidité et une résistance au choc similaires à une pièce obtenue à partir d'une formulation classique dont les charges minérales ajustées à 20 parties en poids de la formulation comportent uniquement du talc. De plus, la pièce selon l'invention présente un allègement compris entre 30 et 40% par comparaison à la même pièce obtenue à partir de la formulation classique.

Selon un troisième aspect, l'invention concerne un procédé d'injection et de moussage caractérisé en ce qu'il comprend les étapes suivantes consistant à :
- prévoir un moule à injection comprenant une partie fixe et une partie mobile,
- positionner la partie fixe et la partie mobile l'un par rapport à l'autre de sorte à former un premier écartement Ei,
- injecter la formulation à base de résine de polypropylène précédemment décrite de sorte remplir la totalité de l'espace délimité par la partie fixe et la partie mobile,
- déplacer la partie fixe et le partie mobile l'un par rapport à l'autre de sorte à former un deuxième écartement Ef supérieur au premier écartement Ei, de sorte à ce que l'agent gonflant génère l'expansion de la formulation par formation d'inclusions de bulle de gaz jusqu'à remplir la totalité de l'espace délimité par la partie fixe et la partie mobile.

Ainsi, la formulation de l'invention permet d'utiliser un procédé d'injection moussage simplifié par comparaison à un procédé conventionnel employant une formulation comprenant des charges minérales uniquement constitutées de talc. En effet, il n'est pas nécessaire d'appliquer une contre-compression d'air dans le moule en même temps que l'injection est réalisée pour obtenir un bel état de surface. Ces inclusions de bulles de gaz sont étirées lors de l'ouverture du moule pour une couche qui assure le transfert de charge entre les deux peaux d'aspect plus rigides et plus résistantes à la rayre. La structure tricouche ainsi obtenue évoque une structure osseuse.

Dans un mode de réalisation particulier, le rapport Ef/Ei est compris entre 1.25 et 2.4 de sorte que l'expansion est réalisée jusqu'à un taux d'expansion compris entre 30 et 50% dans une première région centrale s'étendant suivant la dimension la plus importante de l'espace délimité par la partie fixe et la partie mobile, la première région centrale étant insérée entre une deuxième région et une troisième région de surface en matériau non expansé. Le taux d'expansion de la première région centrale est destinée à alléger la pièce formée tout en conservant les propriétés mécaniques souhaitées et en limitant les risques de délaminage au sein de la première région.

On décrit à présent, à titre d'exemples non limitatifs, plusieurs modes de réalisation possibles de l'invention, en référence aux figures annexées. Dans la suite de la description, par souci de simplification, les éléments communs aux différentes formes de réalisation portent les mêmes références numériques.
La figure 1 illustre une pièce plastique expansée à partir d'une formulation à base de résine de polypropylène selon un mode de réalisation de l'invention.
La figure 2 illustre un moule à injection présentant espace délimité par la partie fixe et la partie mobile formant un premier écartement Ei, selon un mode de réalisation de l'invention.
La figure 3 représente l'espace intérieur du moule rempli d'une formulation à base de résine de polypropylène selon un mode de réalisation de l'invention.
La figure 4 illustre un moule à injection présentant un espace délimité par la partie fixe et la partie mobile formant un second écartement Ef, selon un mode de réalisation de l'invention.
La figure 5 représente un graphique illustrant le déplacement de la partie mobile par rapport à la partie fixe du moule à injection au cours du procédé d'injection et de moussage selon un mode de réalisation de l'invention.

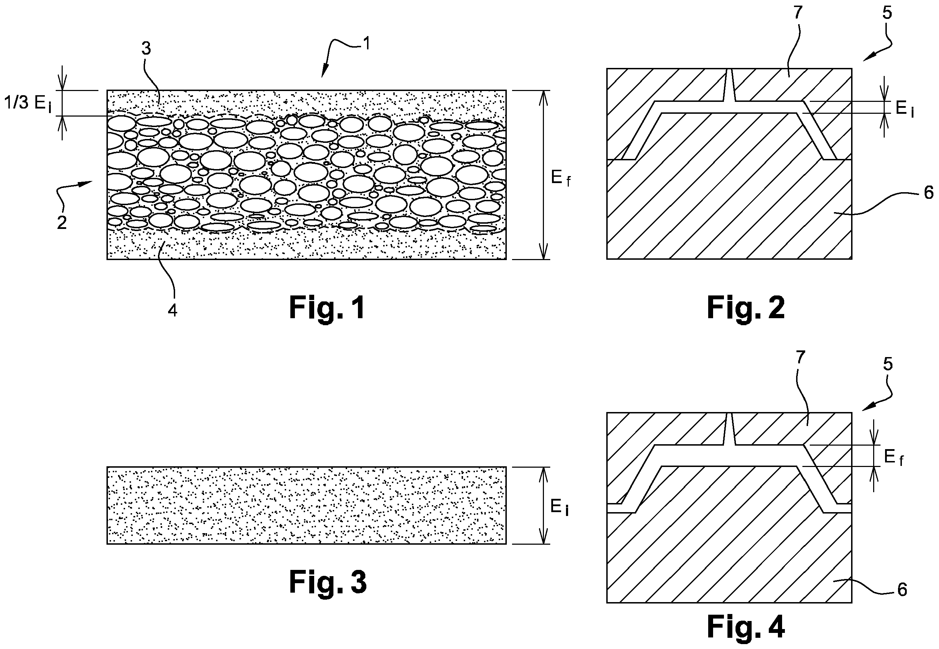

La figure 1 illustre une pièce plastique 1 expansée, destinée à former des pièces intérieures ou extérieures de véhicules. Elle comprend une première région centrale 2 présentant un taux d'expansion pouvant être compris entre 30 et 50%. La pièce 1 présente également de part et d'autre de cette première région 2 une seconde et troisième région de surface 3,4 constituées chacune d'un matériau non expansé formant les couches de peau de la pièce 1. Ces couches de peau 3,4 peuvent présenter une même épaisseur comprise entre (Ef/ 3,75) et (Ef/ 7,2), Ef étant l'épaisseur totale finale de la pièce 1.

La pièce plastique expansée 1 est formée à partir d'une formulation à base de résine de polypropylène composée de 50 à 90 parties en poids d'un copolymère de polypropylène. Ce copolymère peut être constitué à partir de propylène et d'éthylène de faible masse moléculaire.

La formulation comprend également 9 à 20 parties en poids d'un mélange de charges minérales constituées par 40 à 80% de talc. Les autres charges minérales, formant entre 20 et 60% du mélange, peuvent être constituées de charges sphériques telles des microsphères de céramique creuses SC-300 ou SC-500 de Schennor®™, des microsphères de verre creuses de la série HGT de Cenotechnologies, des « glass bubbles » des séries S et K distribuées par 3M. Les autres charges peuvent également être composées de microtalcs tels que ceux de la série Mital 30-80 ou 15-80 fournies par Geokom. Enfin, ces charges peuvent également se présenter sous la forme de fibres synthétiques à base de magnésium, comprenant un diamètre inférieur à un micromètre et une longueur inférieure à 100 micromètres, voire une longueur inférieure à 50 micromètres, telles que les fibres HPR-803 ou HPR803i produites par Milliken qui permettent de former une pièce 1 d'une forte tenue à la rayure.

Afin de pouvoir faire mousser la formulation, il est prévu entre 0.1 et 10 parties en poids d'un agent gonflant tel qu'un agent chimique de type endothermique, la totalité des éléments constituant la formulation est de 100 parties en poids.

La formulation présente avantageusement un indice de fluidité élevé (MFR compris entre 50g/10min et 200g/10min) de sorte à être facilement injectée dans le moule et favorise la création de la zone expansée. La présence de 20 à 60% de charges précédemment citées dans le mélange de charges minérales comprenant du talc permet d'alléger la formulation. Elle atteint une densité comprise entre 0.95 g/cm³ et 1g/cm³ ce qui est inférieur à celle obtenue avec du talc seulement.

La formulation peut par ailleurs comprendre jusqu'à 10 parties en poids d'un additif anti-UV tel que de de sorte à protéger la pièce moulée 1 des rayons fortement énergétiques.

La pièce plastique 1 constituée de la formulation décrite ci-dessus peut ainsi présenter un module d'Young compris entre 1600 et 1750 MPa et une résistance au choc de Charpy, mesurée par entaille, comprise entre 15kJ/m² et 20kJ/m² à 23°C et comprise entre 2kJ/m² et 4kJ/m² à -20°C, qui sont des valeurs équivalentes à celles obtenues avec des pièces similaires comprenant 20 partie en poids de talc comme seule charge minérale, tout en allégeant la pièce de 30 à 40%.

L'invention peut être illustrée par un exemple de formulation suivant avec une injection à 1,4 mm d'épaisseur initialement et une ouverture du moule à 2,4 mm.

| Constituants | Pourcentage en masse |
|---|---|
| PP copolymère fluidité 80 | 84,5 |
| Agent gonflant | 3 |
| Milliken HPR803i | 5 |
| Talc | 7 |
| Antiuv | 0,1 |
| Antioxydants | 0.1 |
| Pigment | 0.2 |
| Antistatique | 0,2 |

De plus, lorsque la pièce 1 a été formée à partir d'une formulation comprenant des fibres synthétiques à base de magnésium, elle peut comporter une tenue à la rayure comprise entre 1,4 et 1,5, mesurée par quadrillage avec une force appliquée de 10N, ce qui constitue une amélioration de la résistance à la rayure des pièces plastiques expansées connues dans le domaine.

Les figures 2, 3 et 4 illustrent les variations d'écartement d'une partie mobile 7 par rapport à une partie fixe 6 d'un moule à injection 5 au cours des différentes étapes d'un procédé d'injection et de moussage de la formulation précédemment décrite. A la figure 2, le moule 5 présente une partie fixe 6 et une partie mobile 7 positionnés l'un par rapport à l'autre de sorte à former un premier écartement Ei et délimitant un espace dans lequel a été injectée la formulation. Comme représenté à la figure 3, l'espace est rempli de la formulation non encore moussée. A la figure 4, la partie mobile 7 et la partie fixe 6 ont été déplacés de sorte à former un deuxième écartement Ef plus important que le premier écartement Ei. L'espace délimité par la partie mobile 7 et la partie fixe 6 présente ainsi un volume augmenté permettant l'expansion de la formulation jusqu'à remplir la totalité de l'espace.

Le rapport Ef/Ei peut être compris entre 1.24 et 2.4 de sorte à obtenir une expansion de la formulation avec un taux de 30 à 50% dans une première région centrale 2 insérée entre une deuxième et une troisième région de surface 3,4. La formulation ainsi expansée forme la pièce plastique 1 illustrée à la figure 1 dont l'épaisseur de la seconde et troisième région de surface 3,4 ou couches de peau peut correspondre au tiers du premier écartement Ei.

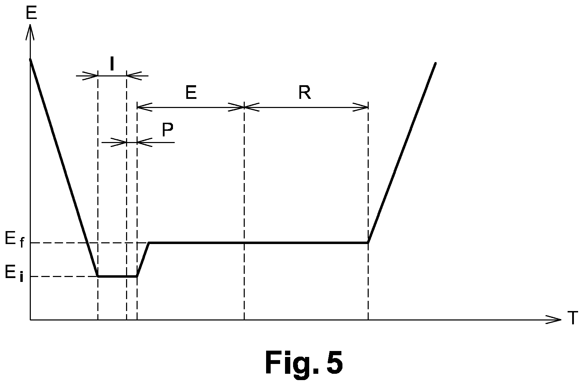

La figure 5 représente l'évolution de l'écartement de la partie fixe 6 et de la partie mobile 7 l'un par rapport à l'autre suivant les différentes étapes du procédé d'injection et de moussage au cours du temps T. Une première étape du procédé consiste à positionner la partie fixe 6 et le partie mobile 7 de sorte à former un premier écartement Ei. La formulation est ensuite injectée jusqu'à remplir la totalité l'espace délimité par la partie fixe 6 et la partie mobile 7 du moule 5 (phase I). Il s'ensuit la formation de la seconde et troisième région de surface 3,4 de la pièce 1 ou couches de peau par contact avec les parois du moule 5 (phase P). La partie mobile 7 est alors écartée de la partie fixe 6 jusqu'à former un deuxième écartement Ef, le rapport Ef/Ei pouvant être compris entre 1.25 et 2.4 de sorte à permettre l'expansion de la formulation jusqu'à totalement remplir l'espace ainsi formé. Cette étape est destinée à former la première région centrale 2 de la pièce 1 (phase E) entre les deux couches de peau 3,4. Enfin, le moule 5 est refroidi jusqu'à température ambiante (phase R) et la pièce 1 expansée d'une épaisseur totale finale Ef peut être retirée du moule 5.

Ainsi l'invention apporte une amélioration déterminante à la technique antérieure en fournissant une formulation fluide, peu dense, permettant d'obtenir une pièce plastique 1 expansée légère, avec un bel état de surface, présentant des propriétés mécaniques satisfaisantes et une forte tenue à la rayure par un procédé simple à mettre en oeuvre.

Il va de soi que l'invention n'est pas limitée aux modes de réalisation décrits ci-dessus à titre d'exemples mais qu'elle comprend tous les équivalents techniques et les variantes des moyens décrits ainsi que leurs combinaisons.

## Revendications

1. Formulation à base de résine de polypropylène comprenant les éléments suivants:
- entre 50 et 90 parties en poids d'un copolymère de propylène et d'éthylène,
- entre 9 et 20 parties en poids d'un mélange de charges minérales comprenant 40 à 80% de talc et 20 à 60% de charges du groupe comprenant des microsphères, des fibres et des microtalcs,
- entre 0,1 et 10 parties en poids d'un agent gonflant, les parties en poids des différents éléments de la formulation étant choisies telles que la somme est de 100 parties en poids,
la formulation présentant un indice de fluidité en masse MFR compris entre 50g/10min et 200g/10min et une densité comprise avant expansion de l'agent gonflant entre de 0.95 g/cm³ et 1g/cm³.

2. Formulation selon la revendication 1 **caractérisée en ce que** le mélange de charges minérales comprend 40 à 80% de talc et 20 à 60% de fibres comprenant des fibres synthétiques à base de magnésium.

3. Formulation selon la revendication 2 **caractérisée en ce que** les fibres présentent un diamètre inférieur à 1 micromètre et une longueur inférieure à 100 micromètres et de préférence une longueur inférieure à 50 micromètres.

4. Formulation selon l'une des revendications 1 à 3 **caractérisée en ce que** la formulation comprend entre 0 et 10 parties en poids d'additif anti-UV et de sorte que la somme des parties en poids des différents éléments de la formulation est de 100 parties en poids.

5. Pièce plastique expansée (1), notamment destinée aux véhicules, **caractérisée en ce qu'**elle est constituée d'un matériau comprenant une formulation à base de résine de polypropylène selon l'une des revendications 1 à 4.

6. Pièce plastique expansée (1) selon la revendication 5 **caractérisée en ce que** le matériau présente un taux d'expansion compris entre 30 et 50 % dans une première région centrale (2) s'étendant selon la dimension la plus importante de la pièce (1), laquelle première région (2) est insérée entre une seconde et une troisième région de surface (3,4) dotées d'un matériau non expansé.

7. Pièce plastique expansée (1) selon l'une des revendications 5 ou 6 **caractérisée en ce qu'**elle présente une résistance à la rayure comprise entre 1,4 et 1,5 mesurée par quadrillage avec une force appliquée de 10N.

8. Pièce plastique expansée (1) selon l'une des revendications 5 à 7 **caractérisée en ce que** la pièce plastique (1) présente une épaisseur totale Ef et que la seconde et la troisième région de surface présentent chacune une même épaisseur comprise entre (Ef/7,2) et (Ef/3,75).

9. Pièce plastique expansée (1) selon l'une des revendications 5 à 8 **caractérisée en ce qu'**elle présente
- un module d'Young compris entre 1600 et 2100 MPa.
- une résistance au choc de Charpy mesurée par entaille et comprise entre 15kJ/m² et 20kJ/m² à 23°C et
comprise entre 2kJ/m² et 4kJ/m² à -20°C.

10. Procédé d'injection et de moussage **caractérisé en ce qu'**il comprend les étapes suivantes consistant à :
- prévoir un moule à injection (5) comprenant une partie fixe (6) et un partie mobile (7),
- positionner la partie fixe (6) et le partie mobile (7) l'un par rapport à l'autre de sorte à former un premier écartement Ei,
- injecter la formulation à base de résine de polypropylène selon l'une des revendications 1 à 4 de sorte remplir la totalité de l'espace délimité par la partie fixe (6) et le partie mobile (7),
- déplacer la partie fixe (6) et le partie mobile (7) l'un par rapport à l'autre de sorte à former un deuxième écartement Ef supérieur au premier écartement Ei, de sorte à ce que l'agent gonflant génère l'expansion de la formulation par formation d'inclusions de bulle de gaz jusqu'à remplir la totalité de l'espace délimité par la partie fixe (6) et le partie mobile (7).

11. Procédé d'injection et de moussage selon la revendication 10 **caractérisé en ce que** le rapport Ef/Ei est compris entre 1.25 et 2.4 de sorte que l'expansion est réalisée jusqu'à un taux d'expansion compris entre 30 et 50% dans une première région centrale (2) s'étendant suivant la dimension la plus importante de l'espace délimité par la partie fixe (6) et le partie mobile (7), la première région centrale (2) étant insérée entre une deuxième région et une troisième région de surface en matériau non expansé.

## Patentansprüche

1. Formulierung, basierend auf Polypropylenharz, umfassend die folgenden Elemente:
- zwischen 50 und 90 Gewichtsteile eines Propylen- und Ethylencopolymers,
- zwischen 9 und 20 Gewichtsteile einer Mischung aus mineralischen Füllstoffen, umfassend 40 bis 80 % Talk und 20 bis 60 % Füllstoffe der Gruppe, umfassend Mikrokügelchen, Fasern und Microtalks,
- zwischen 0,1 und 10 Gewichtsteile eines Treibmittels, wobei die Gewichtsteile der verschiedenen Elemente der Formulierung so ausgewählt sind, dass die Summe 100 Gewichtsteile ist,
wobei die Formulierung einen Massen-Schmelzflussindex (MFR) aufweist, der zwischen 50 g/10 min und 200 g/10 min liegt, und eine Dichte, die vor der Expansion des Treibmittels zwischen 0,95 g/cm³ und 1 g/cm³ liegt.

2. Formulierung nach Anspruch 1, **dadurch gekennzeichnet, dass** die Mischung aus mineralischen Füllstoffen 40 bis 80 % Talk und 20 bis 60 % Fasern umfasst, umfassend synthetische Fasern basierend auf Magnesium.

3. Formulierung nach Anspruch 2, **dadurch gekennzeichnet, dass** die Fasern einen Durchmesser von weniger als 1 Mikrometer und eine Länge von weniger als 100 Mikrometer und vorzugsweise eine Länge von weniger als 50 Mikrometer aufweisen.

4. Formulierung nach einem der Ansprüche 1 bis 3, **dadurch gekennzeichnet, dass** die Formulierung zwischen 0 und 10 Gewichtsteile eines Anti-UV-Zusatzstoffs umfasst, und so dass die Summe der Gewichtsteile der verschiedenen Elemente der Formulierung 100 Gewichtsteile ist.

5. Expandiertes Kunststoffstück (1), insbesondere bestimmt für Fahrzeuge, **dadurch gekennzeichnet, dass** es aus einem Material besteht, umfassend eine Formulierung basierend auf Polypropylenharz nach einem der Ansprüche 1 bis 4.

6. Expandiertes Kunststoffstück (1) nach Anspruch 5, **dadurch gekennzeichnet, dass** das Material eine Expansionsrate aufweist, die zwischen 30 und 50 % in einer ersten zentralen Region (2) liegt, die sich gemäß der Hauptabmessung des Stücks (1) erstreckt, wobei die erste Region (2) zwischen einer zweiten und einer dritten Oberflächenregion (3, 4) eingeführt ist, die mit einem nicht expandiertem Material dotiert sind.

7. Expandiertes Kunststoffstück (1) nach einem der Ansprüche 5 oder 6, **dadurch gekennzeichnet, dass** es eine Kratzfestigkeit aufweist, die zwischen 1,4 und 1,5 liegt, gemessen durch Rasterung mit einer angewendeten Kraft von 10 N.

8. Expandiertes Kunststoffstück (1) nach einem der Ansprüche 5 bis 7, **dadurch gekennzeichnet, dass** das Kunststoffstück (1) eine gesamte Dicke Ef aufweist, und dass die zweite und die dritte Oberflächenregion jeweils eine gleiche Dicke aufweisen, die zwischen (Ef/7,2) und (Ef/3,75) liegt.

9. Expandiertes Kunststoffstück (1) nach einem der Ansprüche 5 bis 8, **dadurch gekennzeichnet, dass** es Folgendes aufweist
- ein Young-Modul, das zwischen 1600 und 2100 Mpa liegt
- einen Charpy-Schockwiderstand, der durch Kerben gemessen wird und zwischen 15 kJ/m² und 20 kJ/m² bei 23 °C liegt und zwischen 2 kJ/m² und 4 kJ/m² bei -20 °C liegt.

10. Injektions- und Schäumungsverfahren, **dadurch gekennzeichnet, dass** es die folgenden Schritte umfasst:
- Vorsehen einer Injektionsform (5), umfassend einen festen Teil (6) und einen beweglichen Teil (7),
- Positionieren des festen Teils (6) und des beweglichen Teils (7) mit Bezug aufeinander, um eine erste Beabstandung Ei zu bilden,
- Injizieren der Formulierung, basierend auf Polypropylenharz nach einem der Ansprüche 1 bis 4, um die Gesamtheit des Raums zu füllen, der vom festen Teil (6) und vom beweglichen Teil (7) begrenzt wird,
- Verschieben des festen Teils (6) und des beweglichen Teils (7) mit Bezug aufeinander, um eine zweite Beabstandung Ef zu bilden, die größer als die erste Beabstandung Ei ist, so dass das Treibmittel die Expansion der Formulierung durch die Bildung von Inklusionen von Gasblasen erzeugt, bis die Gesamtheit des Raums gefüllt ist, der vom festen Teil (6) und vom beweglichen Teil (7) begrenzt wird.

11. Injektions- und Schäumungsverfahren nach Anspruch 10, **dadurch gekennzeichnet, dass** der Bezug Ef/Ei zwischen 1,25 und 2,4 liegt, so dass die Expansion bis zu einer Expansionsrate erfolgt, die zwischen 30 und 50 % in einer ersten zentralen Region (2) liegt, die sich gemäß der Hauptabmessung des Raums erstreckt, der vom festen Teil (6) und vom beweglichen Teil (7) begrenzt wird, wobei die erste zentrale Region (2) zwischen einer zweiten Region und einer dritten Oberflächenregion aus nicht expandiertem Material eingeführt ist.

## Claims

1. A polypropylene resin-based formulation comprising the following elements:
- between 50 and 90 parts by weight of a copolymer of propylene and ethylene,
- between 9 and 20 parts by weight of a mixture of mineral fillers comprising 40 to 80% of talc and 20 to 60% of fillers of the group comprising microspheres, fibers and microtalcs,
- between 0.1 to 10 parts by weight of a blowing agent, the parts by weight of the different elements of the formulation being selected such that the sum is 100 parts by weight,
the formulation having a Melt Mass Flow Rate MFR comprised between 50g/10min and 200g/10min and a density comprised before expansion of the blowing agent between 0.95g/cm³ and 1g/cm³.

2. The formulation according to claim 1, **characterized in that** the mixture of mineral fillers comprises 40 to 80% of talc and 20 to 60% of fibers comprising magnesium-based synthetic fibers.

3. The formulation according to claim 2, **characterized in that** the fibers have a diameter lower than 1 micrometer and a length lower than 100 micrometers and preferably a length lower than 50 micrometers.

4. The formulation according to any of claims 1 to 3, **characterized in that** the formulation comprises between 0 and 10 parts by weight of anti-UV additive and such that the sum of the parts by weight of the different elements of the formulation is of 100 parts by weight.

5. An expanded plastic part (1), in particular, intended for vehicles, **characterized in that** it is constituted of a material comprising a polypropylene resin-based formulation according to any of claims 1 to 4.

6. The expanded plastic part (1) according to claim 5, **characterized in that** the material has an expansion ratio comprised between 30 and 50% in a first central area (2) extending along the largest dimension of the part (1), which first area (2) is inserted between a second and a third surface area (3, 4) provided with an unexpanded material.

7. The expanded plastic part (1) according to any of claims 5 or 6, **characterized in that** it has a scratch resistance comprised between 1.4 and 1.5 measured by grid with an applied force of 10N.

8. The expanded plastic part (1) according to any of claims 5 to 6, **characterized in that** the plastic part (1) has an overall thickness Ef and that the second and third surface areas each has the same thickness comprised between (Ef/7.2) and (Ef/3.75).

9. The expanded plastic part (1) according to any of claims 5 to 8, **characterized in that** it has
- a Young's modulus comprised between 1600 and 2100 MPa.
- a Charpy impact strength measured by stress concentrator and comprised between 15kJ/m² and 20kJ/m² at 23°C and
comprised between 2kJ/m² and 4kJ/m² at -20°C.

10. An injection and foaming process, **characterized in that** it comprises the following steps consisting in:
- providing an injection mold (5) comprising a fixed part (6) and a movable part (7),
- positioning the fixed part (6) and the movable part (7) relative to each other so as to form a first spacing Ei,
- injecting polypropylene resin-based formulation according to any of claims 1 to 4 so as to fill the entire space delimited by the fixed part (6) and the movable part (7),
- displacing the fixed part (6) and the movable part (7) relative to each other so as to form a second spacing Ef greater than the first spacing Ei, so that the blowing agent generates the expansion of the formulation by forming gas bubble inclusions until filling the entire space delimited by the fixed part (6) and the movable part (7).

11. The injection and foaming process according to claim 10, **characterized in that** the ratio Ef/Ei is comprised between 1.25 and 2.4 such that the expansion is carried out up to an expansion ratio comprised between 30 and 50% in a first central area (2) extending along the largest dimension of the space delimited by the fixed part (6) and the movable part (7), the first central area (2) being inserted between a second area and a third surface area made of an unexpanded material.
